(19) Europäisches Patentamt
European Patent Office
Office européen des brevets

(11) **EP 1 591 638 B1**

(12) **FASCICULE DE BREVET EUROPEEN**

(45) Date de publication et mention
de la délivrance du brevet:
**13.10.2010 Bulletin 2010/41**

(51) Int Cl.:
*F01N 9/00* (2006.01)     *F01N 11/00* (2006.01)

(21) Numéro de dépôt: **05300317.4**

(22) Date de dépôt: **25.04.2005**

(54) **Procédé de détermination de la charge d'un filtre à particule**

Verfahren zur Bestimmung der Beladung eines Partikelfilters

Method to determine the loading of a particle filter

(84) Etats contractants désignés:
**AT BE BG CH CY CZ DE DK EE ES FI FR GB GR HU IE IS IT LI LT LU MC NL PL PT RO SE SI SK TR**

(30) Priorité: **29.04.2004 FR 0450820**

(43) Date de publication de la demande:
**02.11.2005 Bulletin 2005/44**

(73) Titulaire: **Peugeot Citroën Automobiles S.A.
78140 Vélizy Villacoublay (FR)**

(72) Inventeurs:
• **Thauvin, Nicolas,
Peugeot Citroen Automobiles SA
78000 Versailles (FR)**
• **Marcelot, Julien,
Peugeot Citroen Automobiles SA
75018 Paris (FR)**
• **Colledani, Frédéric
Peugeot Citroen Automobiles SA
92000 Nanterre (FR)**

(74) Mandataire: **Fernandez, Francis Lionel
PSA Peugeot Citroen
DRIA/PPIQ/VPI
Route de Gisy
Centre Technique de Vélizy
78943 Vélizy Villacoublay Cedex (FR)**

(56) Documents cités:
**EP-A- 1 229 223     EP-A- 1 234 959
EP-A- 1 333 165     US-A- 4 574 589**

• **PATENT ABSTRACTS OF JAPAN vol. 0160, no. 10 (M-1199), 13 janvier 1992 (1992-01-13) & JP 03 233126 A (NISSAN MOTOR CO LTD), 17 octobre 1991 (1991-10-17)**

EP 1 591 638 B1

**Description**

La présente invention concerne un procédé de détermination du chargement d'un piège pour substances polluantes utilisé pour épurer les gaz d'échappement émis notamment par un moteur à combustion interne.

L'invention trouve une application particulièrement avantageuse dans le domaine de l'industrie automobile. Il est en effet, bien connu d'équiper la ligne d'échappement des véhicules par des pièges destinés à retenir les substances polluantes émise par les moteurs avant leur rejet à l'atmosphère et à les traiter lors d'opérations périodiques de régénération ou de purge.

De tels pièges sont, par exemple des filtres à particules, du type à additif ou catalytique comme décrit dans l'état de la technique EP 1 234 959.

De plus en plus de véhicules à motorisation Diesel sont équipés en série d'un filtre à particules (FAP). Ce système permet de piéger les particules générées par le fonctionnement normal du moteur Diesel, évitant ainsi de les rejeter dans l'atmosphère.

Les particules, ou suies, s'accumulant sans cesse, le filtre doit être régénéré périodiquement. Cette opération consiste à brûler les suies en faisant fonctionner le moteur pendant un certain temps dans une certaine plage, ce qui se traduit par une consommation plus élevée de carburant que lors d'un fonctionnement normal. Il est donc préférable de n'effectuer cette opération de régénération que lorsque l'état de charge du filtre à particules l'exige.

Cependant, il n'existe pas aujourd'hui de moyen simple pour mesurer, en temps réel à bord d'un véhicule, la masse exacte de suies accumulées dans le filtre ni la répartition spatiale du FAP de ces suies.

Aussi, le problème technique à résoudre par l'objet de la présente invention est de proposer un procédé de détermination de la charge d'un filtre à particules qui permettrait d'obtenir une estimation plus précise de la masse des suies piégées dans le filtre et donc de n'effectuer la régénération du FAP que lorsque celle-ci est vraiment nécessaire, et ainsi de diminuer la surconsommation de carburant qu'elle induit.

La solution au problème technique posé consiste, généralement par un procédé comportant les opérations suivantes :

- évaluation de la charge dudit piège selon un algorithme prédéterminé,
- calcul à partir de ladite évaluation de la valeur d'une grandeur physico-chimique caractéristique de ladite charge,
- mesure de la valeur de ladite grandeur grâce à des moyens de mesure appropriés,
- comparaison des valeurs calculée et mesurée de ladite grandeur,
- correction de la charge évaluée et/ou de l'algorithme en fonction du résultat de ladite comparaison.

Ainsi, on comprend que, l'évaluation du chargement du piège étant réalisée avec une plus grande précision, les purges du piège ne seront effectuées qu'en cas de réelle nécessité, entraînant ainsi une diminution de la surconsommation de carburant qu'elles induisent.

S'agissant d'un filtre à particules, ladite grandeur est la pression différentielle aux bornes du filtre.

Plus précisement, la solution au problème technique selon l'invention est formulée à la revendication 1.

De plus, l'amélioration de l'estimation de la charge après une régénération permet, dans la perspective de pièges sans maintenance, de fiabiliser le système vis-à-vis des risques de surcharge.

Selon un mode de réalisation de l'invention, la charge du piège est évaluée par intégration du taux par unité de temps de substances polluantes venant s'accumulées dans le piège, suivant le point de fonctionnement du moteur. Dans ce cas, l'invention prévoit alors que la correction de la charge évaluée du piège est appliquée audit taux de substances polluantes.

De manière à augmenter la précision de l'estimation de la grandeur caractéristique du chargement, l'invention recommande de faire intervenir le vieillissement du piège dans le calcul de la grandeur. C'est ainsi qu'il est prévu par l'invention que le calcul de la grandeur caractéristique prend en compte également la distance parcourue par le véhicule équipé du piège, d'une part, et, éventuellement d'autre part, que le calcul de la grandeur estimée prend en compte également la quantité d'additif injecté dans le carburant dans le cas d'un filtre à particules du type fonctionnant avec ajout d'additif

La précision de l'estimation de ladite grandeur peut encore être améliorée lorsque, conformément à l'invention, le calcul de la grandeur estimée prend en compte également un historique de roulage du véhicule.

Le procédé selon l'invention s'affranchit alors de la difficulté d'utiliser directement une mesure dont la valeur dépend fortement du type de roulage effectué par le véhicule.

Par exemple, une même masse de suies générée par un roulage urbain donnera une mesure de la pression différentielle différente de la même masse de suies déposée après un roulage sur autoroute. D'où l'intérêt de prendre en compte, comme le fait l'invention, l'historique de roulage du véhicule.

Le procédé, objet de l'invention, présente de nombreux avantages.

Un premier avantage est que ce procédé n'exige pas l'utilisation de moyens supplémentaires spécifiques mais, au contraire, peut être mis en oeuvre à l'aide de capteurs existants, montés en série avec le filtre à particules.

D'autre part, on peut observer que l'algorithme du procédé conforme à l'invention est exécuté en permanence et en temps réel. L'estimation de la charge du piège est donc constamment et automatiquement recalée. Cette particularité de l'invention est d'autant plus avantageuse que, lorsqu'une régénération est déclarée partielle, la quantité de substances polluantes (suie, oxydes d'azote, etc.) effectivement traitée est mal connue. La correction introduite par le procédé de l'invention permettra ensuite de ramener progressivement, au bout de quelques minutes, l'état de charge du piège à une valeur proche de la réalité.

Enfin, une dégradation subite du piège pourra être détectée en surveillant la différence entre la valeur de la grandeur estimée et la valeur de la grandeur mesurée. Une différence importante qui persisterait pendant un temps trop long pourra être un indice de défaillance du piège (colmatage, fissures, surémission de polluants, etc.) ou de(s) capteurs utilisés.

La description qui va suivre en regard du dessin annexé, donné à titre d'exemple non limitatif, fera bien comprendre en quoi consiste l'invention et comment elle peut être réalisée.

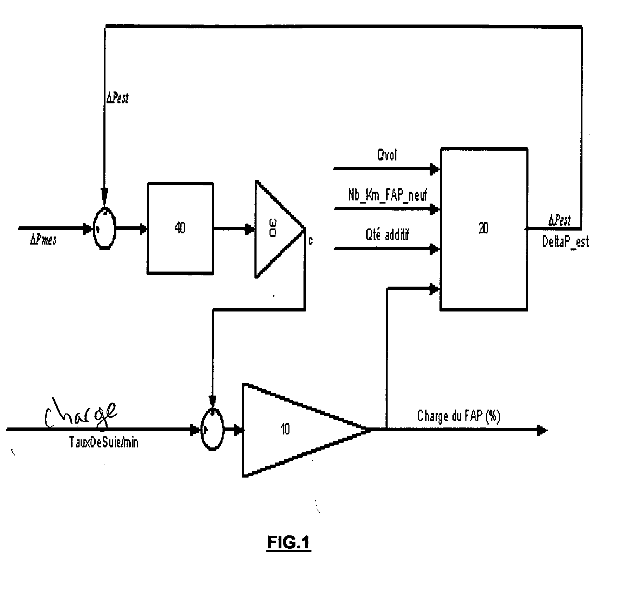

La figure 1 est un schéma d'un circuit de mise en oeuvre du procédé conforme à l'invention.

Le circuit représenté sur la figure 1 est destiné à mettre en oeuvre un procédé de détermination de la charge d'un filtre à particules d'un véhicule automobile. Ce procédé est constitué de plusieurs opérations successives qui vont maintenant être décrites en détail.

La pression différentielle du filtre à particules est d'abord mesurée de manière habituelle au moyen d'un capteur de pression différentielle, on notera $\Delta P_{mes}$ le résultat de cette mesure.

Une évaluation de la charge du filtre à particules est obtenue par intégration 10 partir du taux de suies, ou particules, accumulées dans le FAP par unité de temps, par minute par exemple. Le taux de suies par unité de temps est cartographié dans le calculateur moteur par reconnaissance du type de roulage. Il y a autant de valeurs de taux de suies par unité de temps que de types de roulage caractéristiques retenus, 5 dans l'exemple décrit plus loin.

Parallèlement, on effectue un calcul d'une pression différentielle estimée $\Delta P_{est}$ en appliquant un modèle 20 de FAP qui sera expliqué plus loin.

Cette pression différentielle estimée $\Delta P_{est}$ est ensuite comparée à la pression différentielle mesurée $\Delta P_{mes}$, la différence $\Delta P_{mes} - \Delta P_{est}$ étant appliquée à l'entrée d'un amplificateur 30 dont la sortie fournit une correction au taux de suies par minute avant son intégration par l'intégrateur 10. La correction apportée au taux de suies par minute est fonction de l'écart constatée entre les deux pressions différentielles $\Delta P_{mes}$ et $\Delta P_{est}$ et vient également corriger la charge du filtre de manière à fournir, conformément au but recherché par l'invention, une valeur de la charge du FAP plus proche de la réalité que ne le donnerait un simple calcul effectué à partir de la pression différentielle mesurée $\Delta P_{mes}$.

En pratique, deux cas peuvent se produire :

- la pression différentielle mesurée $\Delta P_{mes}$ est plus grande que la pression différentielle estimée $\Delta P_{est}$. L'état de charge du filtre à particules est alors sous-estimé ; il faut donc appliquer au taux de suies une correction positive pour augmenter la masse de suies dans le FAP et le ramener à une valeur plus proche de sa valeur réelle.

- la pression différentielle mesurée $\Delta P_{mes}$ est plus petite que la pression différentielle estimée $\Delta P_{est}$. L'état de charge du filtre à particules est alors surestimé ; il faut donc appliquer au taux de suies une correction négative pour diminuer la masse de suies dans le FAP et le ramener à une valeur plus proche de la réalité.

Sur la figure 1, on a montré dans le circuit d'amplification un circuit 40 de « zone morte » qui introduit une non-linéarité permettant de ne corriger la masse de suies que si la différence entre les deux pressions différentielles est supérieure en valeur absolue à un certain seuil.

L'algorithme du modèle 10 de FAP utilisé pour le calcul de la pression différentielle estimée $\Delta P_{est}$ a pour particularité de prendre en compte, au travers d'un historique de roulage du véhicule, le fait que la relation entre la pression différentielle et la masse de particules formées dépend du type de roulage suivi par le véhicule.

Le domaine de fonctionnement d'un moteur peut être décomposé en N types de roulage, avec N = 5 par exemple (ville sévère, ville, route, montagne, autoroute), les paramètres retenus pour caractériser les différents types de roulage étant, par exemple, le couple moteur et la vitesse de déplacement du véhicule.

Le type de roulage courant est mémorisé par période de durée $\Delta T$, 1h30 environ par exemple, dans un tableau, dit de long terme, noté TabHistLT($\Delta T$). Ce tableau de long terme contient les valeurs $PcHist_i$ de distribution de chaque type $i$ de roulage, $i$ variant de 1 à N, sur la période $\Delta T$.

Le tableau TabHistLT($\Delta T$) est mis à jour régulièrement à chaque intervalle de temps $\delta T$, toutes les minutes par exemple, avec la distribution de chaque type de trajet moyenné sur l'intervalle $\delta T$. Le tableau correspondant, dit de court terme, est noté TabHistCT($\delta T$). Le tableau de long terme mis à jour après l'intervalle de temps $\delta T$ est alors donné par :

$$\text{TabHistLT}(\Delta T + \delta T) = \alpha.\text{TabHistLT}(\Delta T) + (1-\alpha).\text{TabHistCT}(\delta T)$$

où $\alpha$ est un paramètre d'oubli inférieur ou égal 1 pondérant les contributions respectives du tableau de long terme passé et de la mise à jour fournie par le tableau de court terme. La valeur du paramètre d'oubli dépend directement de l'importance que l'on souhaite donner au roulage actuel par rapport à l'historique déjà mémorisé : plus $\alpha$ est proche de 1 et moins le roulage actuel aura d'influence sur l'historique, l'historique se met alors à jour plus lentement. La valeur de $\alpha$ est laissée à l'appréciation du metteur au point.

Le modèle 10 utilisé pour estimer la pression différentielle $\Delta P_{est}$ en fonction de la charge du FAP est pris comme une combinaison linéaire de N (ici N = 5) modèles élémentaires correspondant aux N types de roulage dont la distribution est donnée dans le dernier tableau de long terme. Pour chaque type i de roulage a été établi un modèle donnant en fonction de la charge du filtre une estimation de la perte $R_i$ de charge associée.

On obtient ainsi pour la pression différentielle estimée l'expression :

$$\Delta P_{est} = Q_{vol}.(R_1.\text{PcHist}_1 + ... + R_N.\text{PcHist}_N)$$

où $Q_{vol}$ est le débit volumique du gaz d'échappement.

Comme on peut le voir sur la figure 1, le modèle 20 de filtre à particules utilisé dans l'estimation da la pression différentielle $\Delta P_{est}$ peut être enrichi en ajoutant un terme lié à la dynamique de la différence de pression différentielle en fonction du débit du gaz d'échappement et un terme de vieillissement prenant en compte la distance parcourue par le véhicule équipé du filtre à particules, ainsi que la quantité d'additif injecté dans le carburant du véhicule.

Plus précisément, la prise en compte du kilométrage parcouru permet d'évaluer les pertes de charge dues aux résidus d'huile à partir d'une consommation moyenne en huile, tandis que la quantité totale d'additif injecté permet d'estimer les pertes de charge dues aux résidus d'additif. On peut alors distinguer dans la perte de charge totale celle due aux suies de celle due aux résidus.

Bien entendu, la présente invention n'est pas limitée au mode de réalisation que l'on vient de décrire, et on peut apporter à ceux-ci de nombreux changements et modifications sans sortir de la présente invention comme défini dans les revendications attachées.

**Revendications**

**1.** Procédé de détermination de la charge d'un filtre à particules pour piéger des substances polluantes contenues dans des gaz d'échappement d'un moteur à combustion interne équipant un véhicule terrestre, **caractérisé en ce que** ledit procédé comporte les opérations suivantes:

    a. évaluation de la charge dudit filtre à particules selon un algorithme prédéterminé,
    b. calcul, à partir de ladite évaluation et d'un historique de roulage du véhicule, de la valeur ($\Delta P_{est}$) de la pression différentielle ($\Delta P$) régnant entre l'entrée et la sortie du filtre, la valeur de la pression différentielle ayant une relation avec la charge dépendant du type de roulage du véhicule, et ledit historique de roulage du véhicule consiste en un tableau TabHistLT ($\Delta T$), dit tableau de long terme, donnant les valeurs de distribution (PcHist$_i$, i=1, ... ,N) de N types de roulage sur une période (out) donnée, la pression différentielle estimée du filtre à particules étant donnée par ($\Delta P_{est}$)= $Q_{vol}.(R_1.\text{PcHist}_1 + ... + R_N.\text{PcHist}_N)$ où $Q_{vol}$ est le débit volumique du gaz d'échappement et Ri la perte de charge pour le type i de roulage (i allant de 1 à N),
    c. mesure de la valeur ($\Delta P_{mes}$) de ladite pression différentielle grâce à des moyens de mesure appropriés,
    d. comparaison des valeurs calculées ($\Delta P_{est}$) et mesurées ($\Delta P_{mes}$) de ladite pression différentielle,
    e. correction de la charge évaluée et/ ou de l'algorithme en fonction du résultat de ladite comparaison.

**2.** Procédé selon la revendication 1, **caractérisé en ce que** le calcul ($\Delta P_{est}$) de ladite grandeur de pression différentielle à partir de l'évaluation de la charge prend en compte également la distance parcourue par ledit véhicule.

**3.** Procédé selon l'une des revendications 1 ou 2, **caractérisé en ce que** le calcul ($\Delta P_{est}$) de ladite grandeur de pression différentielle à partir de l'évaluation de la charge prend en compte également la quantité d'additif injecté dans le carburant du véhicule pour opérer la régénération dudit filtre à particules.

**4.** Procédé selon l'une quelconque des revendications 1 à 2, **caractérisé en ce que** la charge du piège est obtenue par intégration du taux par unité de temps de substances polluantes accumulées dans le filtre à particules.

**5.** Procédé selon la revendication 4, **caractérisé en ce que** la correction de la charge évaluée est appliquée audit taux de substances polluantes.

**6.** Procédé selon l'une des revendications 4 ou 5, **caractérisé en ce que** ledit taux de particules est déterminé à partir de ladite grandeur de pression différentielle mesurée ($\Delta P_{mes}$).

**7.** Procédé selon la revendication 1, **caractérisé en ce que** ledit tableau TabHistLT ($\Delta T$)est mis à jour à chaque intervalle de temps BT, inférieur à $\Delta T$, au moyen d'un tableau TabHistCT($\delta T$), dit tableau de court terme, donnant les valeurs de distribution des N types de roulage sur l'intervalle de temps $\delta T$, avec:

$$\text{TabHistLT }(\Delta T + \delta T) = \alpha.\text{TabHistLT}(\Delta T\ T) + (l - \alpha).\text{TabHistCT}(\delta T)$$

où $\alpha$ est un paramètre d'oubli inférieur ou égal à 1.

**Claims**

**1.** A method for determining the charge of a particle filter to trap pollutant substances contained in exhaust gases of an internal combustion engine equipping a land vehicle, **characterized in that** the said method comprises the following operations:

a. evaluation of the charge of the said particle filter according to a predetermined algorithm,
b. calculation, from the said evaluation and from a history of the vehicle's running, of the value ($\Delta P_{est}$) of the differential pressure ($\Delta P$) prevailing between the inlet and the outlet of the filter, the value of the differential pressure having a relationship with the charge depending on the type of running of the vehicle, and the said history of the vehicle's running consists of a table TabHistLT ($\Delta T$), designated long-term table, giving the distribution values (PcHist$_i$, i=1, ... , N) of N types of running over a given period ($\Delta T$), the estimated differential pressure of the particle filter being given by ($\Delta P_{est}$)= $Q_{vol}.(R_1.\text{PcHist}_1 + ... R_N.\text{PcHist}_N)$ where $Q_{vol}$ is the volumic flow of the exhaust gas and Ri is the loss of charge for running type i (i going from 1 to N),
c. measurement of the value ($\Delta P_{mes}$) of the said differential pressure owing to suitable measurement means,
d. comparison of the calculated values ($\Delta P_{est}$) and measured values ($\Delta P_{mes}$) of the said differential pressure,
e. correction of the evaluated charge and/or of the algorithm as a function of the result of the said comparison.

**2.** The method according to Claim 1, **characterized in that** the calculation ($\Delta P_{est}$) of the said extent of differential pressure from the evaluation of the charge also takes into account the distance covered by the said vehicle.

**3.** The method according to one of Claims 1 or 2, **characterized in that** the calculation ($\Delta P_{est}$) of the said extent of differential pressure from the evaluation of the charge also takes into account the quantity of additive injected in the fuel of the vehicle to operate the regeneration of the said particle filter.

**4.** The method according to any one of Claims 1 to 2, **characterized in that** the charge of the trap is obtained by integration of the rate per unit of time of pollutant substances accumulated in the particle filter.

**5.** The method according to Claim 4, **characterized in that** the correction of the evaluated charge is applied to the said rate of pollutant substances.

**6.** The method according to one of Claims 4 or 5, **characterized in that** the said rate of particles is determined from the said extent of measured differential pressure ($\Delta P_{mes}$).

**7.** The method according to Claim 1, **characterized in that** the said table TabHistLT ($\Delta T$) is updated at each time interval BT, less than $\Delta T$, by means of a table TabHistCT($\delta T$), designated short-term table, giving the distribution values of the N types of running over the interval of time $\delta T$, with:

$$\text{TabHistLT} \ (\Delta T \ + \ \delta T) \ = \ \alpha.\text{TabHistLT}(\Delta T \ T) \ + \ (1 \ - \ \alpha).\text{TabHistCT}(\delta T)$$

where $\alpha$ is a forgetting parameter less than or equal to 1.

**Patentansprüche**

1. Verfahren zum Bestimmen der Charge eines Partikelfilters zum Fangen der verschmutzenden Substanzen, die in Abgasen eines Verbrennungsmotors, der ein Landfahrzeug ausstattet, enthalten sind, **dadurch gekennzeichnet, dass** das Verfahren die folgenden Vorgänge aufweist:

   a. Schätzen der Charge des Partikelfilters gemäß einem vorbestimmten Algorithmus,
   b. Berechnung, ausgehend von der Schätzung, einer Fahrhistorie des Fahrzeugs, des Werts ($\Delta P_{est}$) des Differenzdrucks ($\Delta P$), der zwischen dem Eingang und dem Ausgang des Filters herrscht, wobei der Wert des Differenzdrucks eine Beziehung mit der Charge abhängig von dem Typ des Fahrens des Fahrzeugs hat, und wobei die Fahrhistorie des Fahrzeugs aus einer Tabelle TabHistLT($\Delta T$) besteht, wobei die Langzeittabelle, die die Verteilungswerte ($PcHist_i$, i=1,..., N) von N Fahrtypen über eine gegebene Periode ($\Delta T$) gibt, wobei der geschätzte Differenzdruck des Partikelfilters gegeben wird durch ($\Delta P_{est}$) = $Q_{vol}.(R_i.PcHist_i + ... + R_N.PCHiSt_N)$, wobei $Q_{vol}$ der Volumendurchfluss des Abgases ist und Ri der Lastverlust für den Typ i des Fahrens ist, (wobei i von 1 bis N geht),
   c. Messen des Werts ($\Delta P_{mes}$) des Differenzdrucks dank geeigneten Messmitteln,
   d. Vergleichen der berechneten Werte ($\Delta P_{est}$) und Messwerte ($\Delta P_{mes}$) des Differenzdrucks,
   e. Korrektur der geschätzten Charge und/oder des Algorithmus in Abhängigkeit von dem Resultat des Vergleichs.

2. Verfahren nach Anspruch 1, **dadurch gekennzeichnet, dass** die Berechnung ($\Delta P_{est}$) des Werts des Differenzdrucks ausgehend von der Schätzung der Charge auch die von dem Fahrzeug zurückgelegte Entfernung berücksichtigt.

3. Verfahren nach einem der Ansprüche 1 oder 2, **dadurch gekennzeichnet, dass** die Berechnung ($\Delta P_{est}$) des Werts des Differenzdrucks ausgehend von der Schätzung der Charge auch die Menge Zusatzmittel, die in den Kraftstoff des Fahrzeugs zum Ausführen der Regenerierung des Partikelfilters eingespritzt wird, berücksichtigt.

4. Verfahren nach einem der Ansprüche 1 bis 2, **dadurch gekennzeichnet, dass** die Charge der Falle durch Integration des Prozentsatzes pro Zeiteinheit verschmutzender Substanzen, die sich in dem Partikelfilter angesammelt haben, erzielt wird.

5. Verfahren nach Anspruch 4, **dadurch gekennzeichnet, dass** die Korrektur der geschätzten Charge an den Prozentsatz verschmutzender Substanzen angewandt wird.

6. Verfahren nach einem der Ansprüche 4 oder 5, **dadurch gekennzeichnet, dass** der Partikelprozentsatz ausgehend von dem gemessenen Wert des Differenzdrucks ($\Delta P_{mes}$) bestimmt wird.

7. Verfahren nach Anspruch 1, **dadurch gekennzeichnet, dass** die Tabelle TabHistLT ($\Delta T$) bei jedem Zeitintervall BT kleiner als $\Delta T$ mittels einer Tabelle TabHistCT($\delta T$), Kurzzeittabelle genannt, die die Verteilungswerte der N Fahrtypen über das Zeitintervall $\delta T$ angibt, aktualisiert wird, wobei:

$$\text{TabHistLT}(\Delta T \ + \ \delta T) \ = \ \alpha\text{TabHistLT}(\Delta T \ T) \ + \ (1 \ - \ \alpha). \ \text{TabHistCT}(\delta T)$$

wobei $\alpha$ ein Vergessensparameter kleiner oder gleich 1 ist.

**FIG.1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1234959 A